Europäisches Patentamt

European Patent Office

Office européen des brevets

(11) Veröffentlichungsnummer: **0 226 570**
**A2**

(12) # EUROPÄISCHE PATENTANMELDUNG

(21) Anmeldenummer: 86890331.1

(22) Anmeldetag: 28.11.86

(51) Int. Cl.⁴: **G 01 N 25/00**
**G 01 N 27/00, G 01 N 11/02**

(30) Priorität: 09.12.85 AT 3562/85

(43) Veröffentlichungstag der Anmeldung:
24.06.87 Patentblatt 87/26

(84) Benannte Vertragsstaaten:
BE CH DE FR GB IT LI LU NL SE

(71) Anmelder: Prohaska, Otto, Dipl.-Ing. Dr.
Margarethenstrasse 12
A-3500 Krems(AT)

(72) Erfinder: Prohaska, Otto, Dipl.-Ing. Dr.
Margarethenstrasse 12
A-3500 Krems(AT)

(54) Messeinrichtung und Rohranschluss sowie Herstellungsverfahren für diese.

(57) Die Erfindung betrifft eine Meßeinrichtung, bei der das zu untersuchende Fluid durch einen Meßkanal mit zumindest einer Meßeinrichtung und zumindest eine Einbring- und Austragsöffnung für das Fluid geführt ist, die erfindungsgemäß dadurch gekennzeichnet ist, daß der meßkanal zwischen einem Substrat bzw. Träger und einem im Abstand vom Substrat verlaufenden Wandabschnitt einer aufgebrachten Schicht ausgebildet ist, und daß die Meßeinrichtungen in Schichtform auf das Substrat und oder auf die Schicht aufgebracht sind.

Ferner betrifft die Erfindung einen Rohranschluß, der dadurch gekennzeichnet ist, daß auf zumindest ein gegebenenfalls mit dem Substrat verbundenes Rohr unter Freilassung der Rohröffnung zumindest eine Schicht aufgebracht ist, die mit dem Rohr und dem Substrat dicht verbunden ist und zwischen sich und dem Substrat zumindest einen das Rohrvolumen fortsetzenden Freiraum ausbildet bzw. begrenzt.

Fig. 1

EP 0 226 570 A2

## Meßeinrichtung und Rohranschluß sowie Herstellungsverfahren für diese

Die Erfindung betrifft eine Meßeinrichtung, insbesondere Durchflußmeßeinrichtung, z.B. zur Messung der Wärmeleitfähigkeit, Viskosität, Dichte, des Brechungsindex (Gasen,Flüssigkeiten) Dielektrizitätskonstanten/od.dgl., von Fluiden,/bei der das zu untersuchende Fluid durch einen Meßkanal mit zumindest einer Meßeinrichtung und zumindest eine Einbring- und Austragsöffnung für das Fluid geführt ist, sowie ein Verfahren zur Herstellung einer Meßeinrichtung, insbesondere einer Durchflußmeßeinrichtung für die Wärmeleitfähigkeit, Viskosität, Dichte, Dielektrizitätskonstante, od.dgl. eines Fluids, bei welcher das zu untersuchende Fluid durch einen Meßkanal mit Meßsensoren geführt ist, bzw. in diesen eingebracht ist.

Ziel der Erfindung ist es, derartige Meßeinrichtungen möglichst empfindlich für geringste Substanzmengen auszubilden und für Serienfertigung zu miniaturisieren.

Erfindungsgemäß ist eine Meßeinrichtung der eingangs genannten Art dadurch gekennzeichnet, daß der Meßkanal zwischen einem Substrat bzw. Träger und einem im Abstand vom Substrat verlaufenden Bereich bzw. Wandabschnitt einer, z.B. durch Aufdampfen, Aufspinnen, Aufsputtern, Auftropfen, reaktives Abscheiden, durch CVD-oder PECVD-Verfahren, od.dgl. aufgebrachten Schicht, z.B. aus Kunststoff, Glas, Keramik $Si_3N_4$, $SiO_2$, $SiO$, Kombinationen dieser Materialien, od.dgl., ausgebildet ist, und daß die Meßeinrichtungen in Schichtform auf das Substrat und/oder auf die Schicht aufgebracht bzw. in dem Substrat und/oder in der Schicht gebildet sind, z.B. durch Aufdampfen, Aufspinnen, Aufsputtern, Auftropfen, reaktives Abscheiden, durch CVD- oder PECVD-Verfahren, od.dgl.

Das erfindungsgemäße Verfahren der eingangs genannten Art ist dadurch gekennzeichnet, daß auf ein Substrat eine dem Innenraum des Meßkanals entsprechende Beschichtung aus einer löslichen Substanz, z.B. Fotolack, Kunststoff, od.dgl. aufgebracht wird, daß auf diese lösliche Beschichtung eine diese überdeckende bis auf das Substrat reichende Schicht aufgetragen, z.B. aufgedampft, aufgespinnt, aufgetropft, aufgesputtert, reaktiv oder durch CVD- oder PECVD-Verfahren abgeschieden, od.dgl. wird, die an Stellen, die frei von der löslichen Beschichtung sind, sich mit dem Substrat verbindet bzw. am Substrat anhaftet und zwischen sich und dem Substrat den Meßkanal begrenzt, und daß die lösliche Beschichtung mit einer vorteilhafterweise die Schicht und das Substrat nicht lösenden bzw. angreifenden Substanz durch die in den Meßkanal mündenden Einbring- und/oder Austragöffnungen herausgelöst wird.

Bevorzugte Ausführungsformen der erfindungsgemäßen Meßeinrichtung sowie des erfindungsgemäßen Verfahrens ergeben sich aus den Unteransprüchen, der Beschreibung und der Zeichnung.

Ferner ist es Ziel der Erfindung, Anschlüsse zu dünnen Rohren zu erstellen, um aus diesen Rohren Fluide in Anordnungen, z.B. erfindungsgemäße Meßeinrichtungen, oder aus Anordnungen, z.B. erfindungsgemäßen Meßeinrichtungen, Fluide in die Rohre leiten zu können. Ein Rohranschluß bzw. eine Rohrmündung, insbesondere zum Anschluß an eine Meßeinrichtung obiger Art, ist erfindungsgemäß dadurch gekennzeichnet, daß auf zumindest ein gegebenenfalls mit dem Substrat verbundenes, z.B. verklebtes, Rohr unter Freilassung der Rohröffnung zumindest eine Schicht aufgebracht ist, z.B. aufgetropft, aufgedampft, aufgesputtert, aufgespinnt, reaktiv abgeschieden, durch CVD- bzw. PECVD-Verfahren abgelagert, od.dgl., die mit dem Rohr und dem Substrat dicht verbunden ist und zwischen sich und dem Substrat zumindest einen das Rohrvolumen fortsetzenden Freiraum ausbildet bzw. begrenzt.

Ein Verfahren zur Herstellung derartiger Rohranschlüsse ist erfindungsgemäß dadurch gekennzeichnet, daß auf ein Substrat und auf zumindest ein gegebenenfalls an dem Substrat befestigtes, z.B. angeklebtes, Rohr eine lösliche Substanz, z.B. Fotolack, Kunststoff, od.dgl., in Form einer das Rohrvolumen fortsetzenden Beschichtung aufgetragen wird, daß auf diese lösliche Beschichtung eine diese überdeckende und bis auf das Rohr und das Substrat reichende, dicht am Rohr und dem Substrat anliegende bzw. sich dichtend mit diesen verbindende Schicht aufgetragen wird, z.B. aufgedampft, aufgetropft, aufgesputtert, aufgespinnt, reaktiv oder durch CVD- oder PECVD-Verfahren abgeschieden, od.dgl., und daß daraufhin die lösliche Substanz durch die Mündungsöffnung des Rohres und/oder durch die Mündungsöffnung des von der Schicht begrenzten fortgesetzten Rohrvolumens bzw. Freiraumes vorteilhafterweise mit einer das Substrat und/oder die Schicht nicht angreifenden bzw. diese unberührt lassenden Substanz herausgelöst wird.

Bevorzugte Ausführungsformen des Rohranschlusses bzw. des Verfahrens zu seiner Herstellung sind den Unteransprüchen, der Beschreibung und Zeichnung zu entnehmen.

Eine Auswertung der Meßsignale erfolgt in entsprechenden elektronischen Einrichtungen, die mit auf bzw. in der Schicht bzw. auf bzw. in dem Substrat ausgebildeten Sensorschichten verbunden sind. Diese Einrichtungen bewirken auch die Erwärmung der Heizschichten bzw. die Erzeugung der akustischen Oberflächenwellen und die sonstigen, zur Messung notwendigen Beeinflussungen der ausgebildeten Schichten.

Es ist verständlich, daß auch Meßeinrichtungen anderer Art als im folgenden beschrieben, auf die erfindungsgemäße Weise hergestellt werden können, z.B. Chromatographieeinrichtungen, pH-Meßgeräte, Druckmeßgeräte, usw.

- 4 -

0226570

Die Auswahl der für die lösliche Substanz bzw. deren Lösungsmittel einzusetzenden Substanzen kann in weitem Bereich dem Fachmann überlassen werden.

Im folgenden wird die Erfindung anhand der Zeichnung näher erläutert. Es zeigen:

Fig. 1  eine Meßeinrichtung zur Viskositäts- und/oder Wärmeleitungsfähigkeitsmessung,

Fig. 1a und 1c Varianten von Fig. 1,

Fig. 1b ein Schema des Temperaturverlaufes,

Fig. 2  eine Meßeinrichtung zur Messung der Viskosität und/oder Dielektrizitätskonstanten, Fig. 2b eine Ausführungsform dazu,

Fig. 2a ein Diagramm für die Meßeinrichtung gemäß Fig. 2,

Fig. 3  eine Meßeinrichtung für Dichtemessungen und

Fig. 3a einen Schnitt durch Fig. 3.

Fig. 4  zeigt eine Anordnung zur Verbindung von zwei Rohren,

Fig. 5  eine Meßeinrichtung, bei der die Zu- und Abflußöffnung von eingebundenen Rohren gebildet sind,

Fig. 6  die Anordnung eines Rohres auf einem Substrat,

Fig. 7  die Ausbildung einer Düse in Verlängerung eines Rohres, und

Fig. 8  und 9 /verschiedene Möglichkeiten, einzelne auf einem Substrat befindliche Rohre zu verbinden.

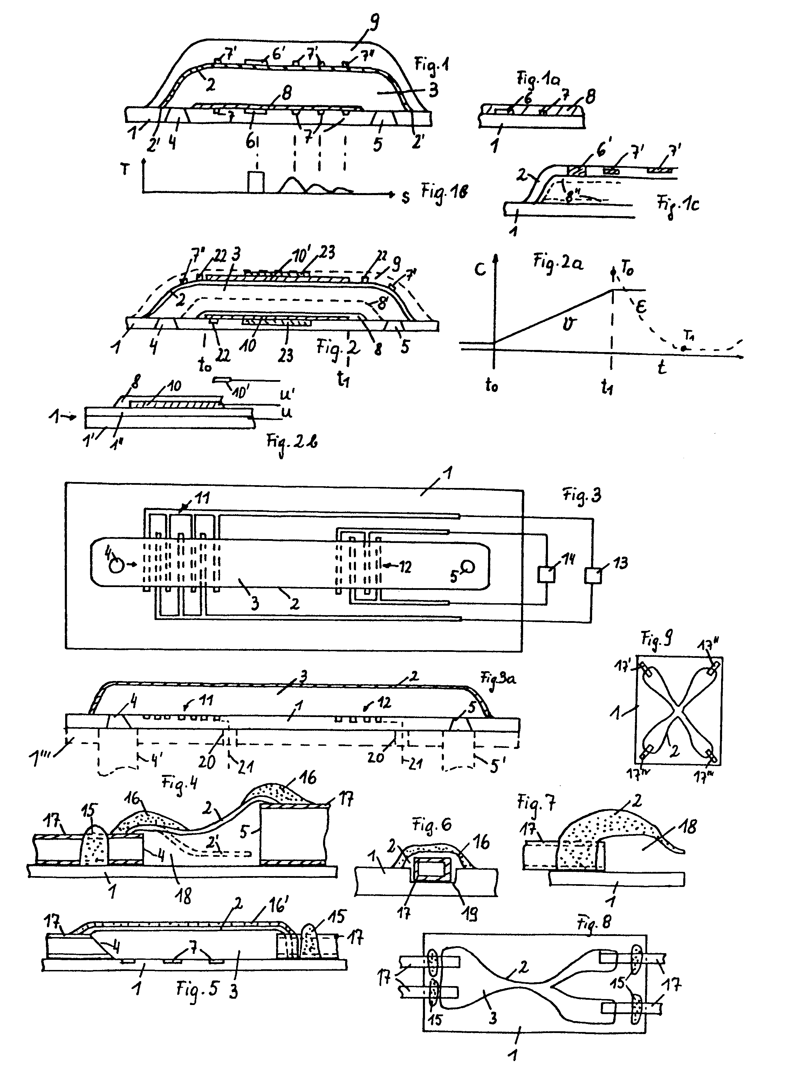

Fig. 1 zeigt eine Meßeinrichtung, die insbesondere zur Messung der Wärmeleitfähigkeit und der Viskosität eines Fluides bestimmt ist. Auf einem Substrat 1 wird eine Schicht 2 derart aufgebracht, daß zwischen dem Substrat 1 und der Schicht 2 ein Meßkanal ausgebildet wird, der zumindest eine Zuflußöffnung 4 und eine Abflußöffnung 5 für das Fluid aufweist. Die Schicht 2 wird auf das Substrat aufgebracht, indem man vorerst auf das Substrat 1 eine lösliche Substanz aufbringt, welche die Form des späteren Meßkanals 3 besitzt, und sodann auf diese lösliche Substanz die Schicht 2 aufbringt, die die lösliche Substanz überdeckt und bis auf das Substrat 1 reicht, um sich an diesen Stellen bzw. Randbereichen (2') mit dem Substrat 1 zu verbinden bzw. an diesem dicht anzuhaften. Daraufhin wird die den Meßkanal 3 darstellende lösliche Substanz durch die Zufluß- und/oder Abflußöffnungen 4,5 herausgelöst und der Meßkanal 3, der von der Schicht 2 und vom Substrat 1 begrenzt wird, verbleibt. Um den Meßkanal 3 mit den notwendigen Meß- bzw. Sensoreinrichtungen und/oder das Fluid beeinflussenden Einrichtungen zu versehen, können sowohl auf und/oder in dem Substrat 1 als auch auf und/oder in der Schicht 2 entsprechende Geber- bzw. Sensorschichten aufgebracht oder ausgebildet werden, die für bestimmte Einsatzzwecke vorgesehen sein können. Die Schichten auf bzw. in dem Substrat 1 und allfällige Abdeckschichten 8 auf dem Substrat 1 werden dabei vorteilhafterweise vor dem Aufbringen der löslichen Substanz aufgebracht. Es ist aber auch möglich, nach dem Auslösen der löslichen Substanz die Innenfläche des Meßkanales 3 durch Einbringen von Deckschichten 8" (Fig. 1 c) zu passivieren oder den Meßkanal durch Ätzen aufzuweiten oder die Geber- und/oder Sensorschichten nachträglich zu beeinflussen und in ihren Eigenschaften zu verändern.

In Fig. 1 ist mit 6 eine in eine Vertiefung im Substrat 1 aufgebrachte und mit 6' eine auf die Schicht 2 aufgebrachte oder im Substrat 1 durch Implantation, Dotation od.dgl., ausgebildete Heizschicht bezeichnet, die über entsprechende Kontakte mit nicht dargestellten Stromzufuhreinrichtungen verbindbar ist. Mit 7 sind auf das bzw. im Substrat 1 auf- bzw. eingebrachte und mit 7' auf die Schicht 2 aufgebrachte Temperatursensorschichten bezeichnet. Diese Temperatursensorschichten 7,7' können z.B. Schichten sein, die mit der Temperatur ihren Widerstand ändern, Halbleiterschichten, mit Ionen dotierte Schichten des Substrates 1 oder der Schicht 2, aufgebrachte Metallschichten, usw. Wie Fig. 1c zeigt, können die Schichten 6',7' auch in der Schicht 2 ausgebildet werden und gegebenenfalls von einer Deckschicht 8" abgedeckt werden. Dies ist insbesondere dann möglich, wenn z.B. die Schicht 2 oder das Substrat 1 aus einer amorphen Si-Schicht besteht, der eine Funktion als Sensor oder das Fluid beeinflussende Gebereinrichtung verliehen wird, indem die Si-Schicht dotiert wird, Ionen implantiert werden oder eine reaktive Ablagerung oder CVD- oder PECVD-Ablagerung erfolgt. In diesem Fall ist die Schicht 2 bzw. das Substrat 1 selbst Teil bzw. Grundlage für die Meß- oder Fluidbeeinflussungseinrichtung.

Die Schichten 6 und 7 können, wie Fig. 1 zeigt, in z.B. eingeätzte Vertiefungen im Substrat 1 aufgebracht werden oder, wie Fig. 1a zeigt, auf das Substrat erhaben aufgebracht werden. Schließlich können die auf dem Substrat 1 befindlichen Schichten 6 und 7 mit einer Deckschicht 8 abgedeckt werden (vor Aufbringen der löslichen Substanz), sodaß das untersuchte Fluid die Schichten 6,7 nicht beeinflussen kann. Auch über die Schicht 2 und die auf diese Schicht 2 aufgebrachten Heiz- bzw. Meßschichten 6',7', kann eine Verstärkungsschicht 9, die relativ dick sein kann, aufgebracht werden, um der Meßeinrichtung die erforderliche Stabilität zu verleihen.

Bei dieser so wie bei allen anderen dargestellten Ausführungsformen kann das Aufbringen der einzelnen Schichten 2,8,9,8' usw. durch Auftropfen, Aufstreichen, Sputtern, Spinnen, Aufdampfen, usw., erfolgen. Als Lösungsmittel für die lösliche Substanz, auf der die Schicht 2 ausgebildet wird, können beliebige Lösungsmittel verwendet werden, sofern sie das Substrat 1 bzw. die Schicht 2 nicht nachteilig beeinflussen. Ebenso ist zu berücksichtigen, daß die am Substrat angeordneten Schichten bzw. Leiterschichten bzw. Sensorschichten bzw. die Deckschicht 8 nicht in unerwünschter Weise beeinflußt wird. Durch Einsatz bestimmter Lösungsmittel kann jedoch eine Nachbearbeitung oder Änderung der Schichteigenschaften erreicht werden.

Die Stärke der Schicht 2 beträgt vorteilhaft zwischen 1 und 50 μm, die Höhe des Meßkanals beträgt vorteilhaft bis zu 50 μm und hat nach unten nahezu keine Beschränkung, die Breite des Meßkanals kann z.B. zwischen 1 μm bis 500 μm liegen und die Länge kann z.B. 10, 20 oder 30 mm betragen. Es wird jedoch bemerkt, daß diese Angaben nach Bedarf abänderbar sind. Bevorzugt ist es jedoch, wenn die Höhe des Meßkanals gegenüber seiner Breite gering ist, sodaß die Breite ein Vielfaches der Höhe beträgt. Dadurch steht das zu untersuchende Fluid in optimalem Kontakt mit den vorgesehenen Meß- bzw. Beeinflussungseinrichtungen. Die Dicke der Sensor- bzw. Beeinflussungseinrichtungen kann zwischen 0,2 und 40 μm betragen.

Der Meßvorgang bei einer Viskositätsmessung verläuft nun derart, daß nach einem Aufheizen einer bestimmten Fluidmenge bzw. Wärmezufuhr für eine bestimmte Zeitspanne mit der Heizschicht 6,6' das Durchströmen des erwärmten Fluids an den einzelnen Meßschichten 7 gemessen wird und aus der Geschwindigkeit der Durchbewegung des Fluids die zur Geschwindigkeit proportionale Viskosität berechnet wird. Zur Auswertung der Meßergebnisse für die Viskositätsmessung muß noch der Druck an der Einströmöffnung und der Druck an der Ausströmöffnung bekannt sein, wozu insbesondere im Bereich der Einström- und/oder Ausströmöffnung drucksensitive Schichten 7" vorgesehen sein können. Bevorzugterweise wird derart vorgegangen, daß dem Meßkanal 3 ein Referenzmeßkanal zugeordnet wird und beide Meßkanäle an die Atmosphäre geführt werden. Es muß damit nicht der Eingangsdruck und der Ausgangsdruck wie bei einer Messung in nur einem Meßkanal gemessen werden sondern nur eine gleiche Druckdifferenz zwischen den jeweiligen Eingangs- und Ausgangsdrücken eines jeden Meßkanals eingestellt werden, um aus den Meßergebnissen des Meßkanals und des Referenzmeßkanals die Viskosität errechnen zu können. Ein stabiler Eingangsdruck und/oder Ausgangsdruck kann z.B. durch Reservoirs für die Fluide eingestellt werden.

Die Wärmeleitfähigkeit kann gemessen werden, indem auf das Fluid eine gewisse einen zeitlichen Verlauf besitzende Wärmemenge aufgegeben wird und das Auftreten des Temperaturmaximums zu den verschiedenen Zeiten bei den einzelnen Temperatursensorschichten 7 gemessen wird und aus dem Verlauf bzw. der Abnahme des Temperaturmaximums auf die Wärmeleitfähigkeit rückgeschlossen wird. Diese Messung wird insbesondere bei stillstehendem Fluid durchgeführt und ist im Prinzip in Fig. 1b dargestellt.

Sämtliche zu Fig. 1 getroffenen Ausführungen gelten dem Prinzip nach auch für alle weiteren Ausführungsformen bzw. die angeführten Merkmale sind mit den weiteren Merkmalen kombinierbar.

Fig. 2 zeigt eine Meßeinrichtung zur Messung der Viskosität und/oder Dielektrizitätskonstanten, die vom Prinzip her ähnlich aufgebaut ist wie die in Fig. 1 dargestellte Meßeinrichtung.

Auf das Substrat 1 und auf die den Meßkanal 3 begrenzende Schicht 2 sind jeweils Leiterschichten 10,10' aufgebracht, die Kondensatorplatten darstellen und wieder über entsprechende Leitungen mit elektronischen Einrichtungen zur Kapazitätsmessung (nicht dargestellt) verbunden sind. Wird nunmehr durch den Meßkanal 3 Fluid durchgeströmt, so beginnt, wie in Fig. 2a verdeutlicht, zum Zeitpunkt $t_0$ die Front des Fluids in den von den Schichten 10,10' gebildeten Kondensator einzutreten. Bei Weiterströmen des Fluides wird die Front den Kondensator immer weiter durchqueren und dessen Kapazität verändern bzw. erhöhen. Zum Zeitpunkt $t_1$ ist der Kondensator mit dem Fluid gefüllt und seine Kapazität erreicht den Maximalwert. Aus der Veränderung, insbesondere dem Anstieg der Kapazität, wenn im Meßkanal 3 zuvor zwischen den Kondensatorschichten 10,10' Luft oder Vakuum war, kann auf die Durchströmgeschwindigkeit des Fluides rückgeschlossen werden, und da die Geschwindigkeit proportional zur Viskosität ist, kann die Viskosität errechnet werden.

Vorteilhaft für die Meßgenauigkeit ist es, wenn die Dicke des Meßkanals 3 der einer Schicht entspricht, die zwischen dem Meßkanal 3 und einer Kondensatorfläche, z.B. 10, gelegen ist. In Fig. 2 ist deshalb die Deckschicht 8 strichliert nochmals mit größerer Dicke unter dem Bezugszeichen 8' eingezeichnet, und weist in etwa eine Dicke auf, die der Dicke des Meßkanals 3 entspricht.

Die Dielektrizitätskonstante kann aus der Kapazität des fluidgefüllten Kondensators im Vergleich zum leeren Kondensator oder im Vergleich zu einem gleich aufgebauten Referenzmeßkanal, der mit Referenzfluid versorgt wird, berechnet werden.

In Fig. 2b ist eine Ausführungsform der Fig. 2 dargestellt, bei der das Substrat 1 in eine undotierte Schicht bzw. Grundschicht 1' und eine dotierte Schicht 1" unterteilt ist. Als undotierte Schicht kann z.B. Si oder eine p-Si-Schicht 1' vorgesehen sein, auf die eine z.B. mit Phosphor dotierte n-Si-Schicht 1" aufgebracht ist, sodaß eine Sperrschichtkapazität ausgebildet wird. Es kann nunmehr an die Kondensatorschichten 10,10' eine entsprechende Spannung U' angelegt bzw. abgefühlt werden, um die Kapazität und damit die Viskosität bzw. Dielektrizitätskonstanze zu bestimmen. Zur Meßwertsteuerung ist es jedoch möglich, auch eine Potentialdifferenz U zwischen der Kondensatorschicht 10 und der undotierten oder Grundschicht 1' auszubilden bzw. eine entsprechende Spannung anzulegen und die Kapazität zwischen der Schicht 1' und der unteren Kondensatorschicht 10 zu verändern. Entsprechende Leitungen und elektronische Einrichtungen sind dazu vorzusehen.

Fig. 3 und 3a zeigen eine Anordnung zur Bestimmung der Dichte eines Fluids in Draufsicht und im Schnitt. In Vertiefungen und/oder auf der Oberfläche des piezoelektrischen Substrates 1 sind Geberschichten 11 und Empfängerschichten 12 angeordnet, die fingerartig ineinandergreifen. Mit den Geberschichten 11, die jeweils an einen Ausgang eines Hochfrequenz-Generators 13 angeschlossen sind, der eine Frequenz von z.B. 20 bis 50 kH im Niederspannungsbereich abgibt, werden akustische Oberflächenwellen im Substrat 1 induziert. Mit den Empfängerschichten 12, die stromauf und/oder stromab von den Geberschichten 11 angeordnet sein können und die an einen Detektor bzw. eine Auswerteeinrichtung 14 angeschlossen sind, können die Resonanzwellen empfangen und ausgewertet werden. Läßt man verschiedene Fluide in den Meßkanal 3 einströmen, so ändern sich die Formen bzw. die Dämpfung der empfangenen Oberflächenwellen (Surface Acoustic Waves) in Abhängigkeit von der Dichte des Fluids im Meßkanal 3.

Fig. 4 zeigt zwei auf einem Substrat 1, z.B. mittels eines Kleberauftrages 15, befestigte Rohre 17. Die beiden Rohre sind mit einer Schicht 2 verbunden, die im Abstand vom Substrat 1 verläuft und sowohl an den Rohren 17 als auch am Substrat 1 dichtend anliegt. Die Übergänge von der Schicht 2 zu den Rohren 17, Knickungen, exponierte Krümmungen od.dgl. können mittels Verstärkungsschichten 16 verstärkt werden, die aus dem gleichen oder einem anderen Material wie die Schicht 2 ausgebildet sind. Hergestellt wird ein derartiger Aufbau, indem auf die gegebenenfalls auf dem Substrat 1 bereits befestigten Rohre 17 bzw. deren Endbereiche und auf das Substrat 1 eine lösliche Substanz aufgetragen wird, die dem Verlauf des Freiraumes zwischen den beiden Rohrenden entspricht und deren Auftragsbereich z.B. mit einer Maske begrenzt wird. Sodann wird auf die lösliche Substanz das Material für die Schicht 2 aufgebracht, und die lösliche Substanz derart überdeckt, daß die Schichtränder bis auf das Substrat 1 reichen und sich mit diesem dicht verbinden. Nach Erhärten der Schicht wird die lösliche Substanz durch die Rohre 17 herausgelöst. Damit ergibt sich eine dichte, leicht herzustellende und für kleinste Rohrgrößen bzw. Dimensionen geeignete Verbindungsmöglichkeit.

Wie Fig. 5 zeigt, kann ein derartiger Aufbau auch zur Ausbildung von Zufluß- und Abflußöffnungen 4,5 eines Meßkanals 3 einer Meßeinrichtung eingesetzt werden, wobei die in den Meßkanal 3 integrierten Rohre 17 Löcher im Substrat 1 vermeiden. Die von einem Rohr angelieferten Fluide werden durch die Mündungen 4,5 der Rohre 17 in den Meßkanal 3 eingeführt bzw. aus diesem durch das andere Rohr abgeführt. Der Aufbau des Substrates 1 mit Sensorflächen 7 bzw. der Aufbau der Meßeinrichtung kann ähnlich wie in den Fig. 1 bis 3 erfolgen. Die Schicht 2 kann nach außen hin mit einer Verstärkungsschicht bzw. Deckschicht 16'abgedeckt sein, die ebenso aufgebracht werden kann wie die Schicht 2 und aus denselben oder anderen Materialien (z.B. Kleber) bestehen kann. Die Enden der Rohre 17 können auch unter beliebigen Winkeln abgeschrägt sein.

Wie Fig. 6 zeigt, können die Rohre 17 bzw. deren Endbereiche allseitig oder zumindest auf ihrer nach außen weisenden Seite von der Schicht 2 umgeben und so dicht und fest mit dem Substrat 1 verbunden sein. Zusätzlich kann die bis auf das Substrat reichende und dort haftende Schicht 16 die Verbindung zwischen dem Rohr 17 und dem Substrat 1 verbessern, auch wenn die Rohre 17 bereits mit einem Kleberauftrag 15 mit dem Substrat 1 fest verbunden sind.

Wie Fig. 6 zeigt, können die Rohre 17 in Vertiefungen 19 im Substrat 1 angeordnet werden. Die Querschnittsform der Rohre 17 ist beliebig, sie kann rund, rechteckig, quadratisch, od.dgl. sein; entsprechend werden die Ausnehmungen im Substrat 1 ausgearbeitet oder ausgeätzt.

Will man nun ein Rohr 17 mit dem Substrat 1 verbinden (Fig. 7) und eine spezielle Rohrverlängerung vorsehen, so wird das Rohr 17, gegebenenfalls nach seiner Befestigung am Substrat 1, z.B. mittels eines Klebers, im Bereich der Rohrmündung mit einer löslichen Substanz umgeben, welche die gewünschte Form der Rohrverlängerung bzw. eines das Rohrvolumen verlängernden Freiraumes[48], z.B. einer Düse, besitzt. Daraufhin wird auf die lösliche Substanz eine die Form des Freiraumes wiedergebende Schicht 2 aufgebracht, nach deren Erhärten die lösliche Substanz durch das Rohr und/oder den unbedeckt gebliebenen Teil der löslichen Substanz herausgelöst wird, sodaß die Schicht z.B. als düsen-artige Verlängerung[48] des Rohres 17 verbleibt. Derartige Rohrverlängerungen sind z.B. erwünscht, wenn man durch das Rohr 17 Substanzen z.B. in Gewebe injizieren oder zuführen will. Ähnlich wie in Fig. 7 ist auch in der Fig. 4 eine Schicht 2' dargestellt, die eine düsenartige Verlängerung eines Rohres 17 zeigt und auch mit einer Verstärkungsschicht 16 verstärkt sein kann.

Fig. 8 zeigt einen Aufbau, bei dem auf einem Substrat mehrere/Rohre 17 nicht unbedingt parallele angeordnet sind, die mit einem Kanal, der von der Schicht 2 und dem Substrat 1 begrenzt wird, verbunden sind. Die Mündungen der links gelegenen Rohre 17 werden hiebei zusammengefaßt, worauf sich der Meßkanal 3 im Querschnitt verringert; daraufhin teilt sich der Meßkanal 3 in zwei Kanäle, die verschiedenen Querschnitt aufweisen und zu verschiedenen Rohren 17 geführt sind. Mit der beschriebenen erfindungsgemäßen Vorgangsweise können nahezu beliebige Verzweigungen, Querschnitte und Verläufe von Kanälen zwischen einer Vielzahl von Rohren hergestellt werden und dadurch ventilartige Steuerungen und Flußveränderungen bewirkt werden.

Es ist ferner möglich, den Verlauf des Meßkanals 3, z.B. gemäß Fig. 8, ebenfalls (wie in Fig. 6 gezeigt) im Substrat 1 auszuätzen, um einen ent-sprechend glatten Übergang der lichten Weite der Rohre zum Meßkanal 3 zu erhalten. Übliche Durchmesser von Rohren für derartige Vorgangsweisen sind etwa 5 µm bis 200 µm, die in der Praxis schwer mit Dünnschichtstrukturen verbindbar sind.

Es ist auch möglich, zwei unmittelbar nebeneinanderliegende bzw. einander berührende Rohre mit einem derartigen Anschluß zu verbinden.

0226570

Die erfindungsgemäßen Meßeinrichtungen und Rohranschlüsse können insbesondere bei der Untersuchung von Körper- bzw. Gewebeflüssigkeiten eingesetzt werden, z.B. zur Zufuhr von Stoffen zu einem Nerv, od.dgl. Es sind jedoch auch andere technische Anwendungen derartiger Anordnungen möglich, z.B. für Tintenstrahlschreiber oder andere Einrichtungen, bei denen Leitungssysteme aus dünnsten Rohren mit Anschlußeinrichtungen verbunden werden sollen oder Fluide in Rohre eingeleitet werden sollen. Ein großer Vorteil derartiger Meßeinrichtungen ist es, daß die Meßeinrichtungen auch bei geringsten Substanzmengen genaue Ergebnisse liefern.

Als Material für die Schichten 2 bzw. 16 kommen insbesondere organische Kunststoffe, Polymere, Epoxyharze, bzw. anorganische Materialien wie z.B. Siliziumnitrid, $SiO_2$, SiO, SiC und ähnliche Stoffe in Betracht.

Unter CVD ist 'chemical vapor deposition', d.h. reaktives Abscheiden aus der Gasphase, und unter PECVD 'plasma enhanced chemical deposition' zu verstehen, d.h. zwei Arten eines reaktiven Abscheidens.

Die Kontaktierung der Meß- und der Fluidbeeinflussungsschichten erfolgt z.B. mit Leiterbahnen, die auf dieselbe Art wie die Schichten oder die Meßsensoren aufgebracht werden können.

Es ist verständlich, daß in einem Meßkanal eine beliebige Anzahl und Kombination der beschriebenen Meßeinrichtungen und/oder Beeinflussungseinrichtungen vorgesehen sein kann, die auf das Substrat 1 und/oder die Schicht 2 aufgetragen oder in diese(s) integriert sein können.

Zur Fluiduntersuchung, z.B. Brechungsindexmessung, können auch Lichtgeber und optische Detektoren der(m) durchsichtig ausgebildeten Schicht bzw. Substrat zugeordnet werden und/oder in bzw. auf dem Substrat 1 und/oder bzw. auf der Schicht 2 lichtsensitive bzw. optisch aktive Bereiche ausgebildet werden. So könnte z.B. einem schräg Licht in den Meßkanal einstrahlenden optischen Geber auf der anderen Kanalseite ein das Licht in einem optischen Sensor reflektierenden Spiegelfläche zugeordnet sein und aus der Veränderung des durchstrahlten Lichtes Rückschlüsse auf das Fluid gezogen werden.

0226570

Fig. 9 zeigt eine Anordnung zur Durchflußsteuerung; die Durchströmung eines Fluides vom Rohr 17' zum Rohr 17'" durch den von der Schicht 2 gebildeten Kanal kann durch Einströmen eines Fluides im Rohr 17" verändert werden. es ist sogar möglich, die gesamte, bei 17' zugeführte Fluidmenge in den zum Rohr 17"" führenden Kanal umzulenken. Es lassen sich erfindungsgemäß miniaturisierte Ventil- bzw. Durchflußsteuerungen erstellen.

In Fig. 3a ist strichliert dargestellt, wie ein aus Si bestehendes Substrat 1 mit einer Zuführungsplatte bzw. einem IC-Sockel 1'" verbunden werden kann. Die Platte 1'" besteht aus vergoldetem Metall, sodaß diese in bekannter Weise durch eutektisches Löten mit dem aus Si bestehenden Substrat 1 insbesondere gasdicht verbunden werden kann. In der Platte 1'" können Zufluß- und Abflußrohre 4',5' eingelötet sein, sodaß auf diese Weise Fluidanschlüsse für den Meßkanal 3 verwirklicht werden können. Mit 20 sind Keramikdurchführungen für Meßdrähte 21 bezeichnet, mit denen die Sensorschichten kontaktiert werden können.

In Fig. 2b ist mit 22 ein Temperatursensor bezeichnet und mit 23 Heizeinrichtungen, sodaß diese Meßeinrichtung zusätzlich auch zur Messung der Verdampfungswärme einsetzbar ist. Dazu wird derart vorgegangen, daß der Kanal mit Fluid aufgefüllt wird und die Temperatur im Meßkanal 3 gemessen wird. Leicht flüchtige Substanzen entziehen der Umgebung beim Verdampfen Wärme, die mit dem Sensor 22 gemessen wird; der Temperaturverlauf ist in Fig. 2a strichliert eingezeichnet; aus der Zeit und dem Temperaturverlauf zwischen $T_0$ (Anfangstemperatur und gefüllter Meßkanal) und $T_1$ (Endtemperatur, bei der der Meßkanal leer ist) kann die Verdampfungswärme berechnet werden. Die Menge der im Meß-kanal befindlichen Substanz kann aufgrund der gleichzeitig gemessenen Kapazität festgestellt werden.

Es könnte aber auch dauernd Wärme zugeführt werden und aus dem Temperaturverlauf die Verdampfungswärme bestimmt werden.

Es versteht sich insbesondere aus Fig. 2, daß die Sensor- und Fluidbeeinflussungsschichten neben- und/oder übereinander vorgesehen sein können.

Patentansprüche:

1. Meßeinrichtung, insbesondere Durchflußmeßeinrichtung, z.B. zur Messung der Wärmeleitfähigkeit, Viskosität, Dichte, Dielektrizitätskonstanten, des Brechungsindex, od.dgl., von Fluiden (Gasen und/oder Flüssigkeiten), bei der das zu untersuchende Fluid durch einen Meßkanal mit zumindest einer Meßeinrichtung und zumindest eine Einbring- und Austragsöffnung für das Fluid geführt ist bzw. in diesen eingebracht ist, dadurch gekennzeichnet, daß der Meßkanal (3) zwischen einem Substrat bzw. Träger (1) und einem im Abstand vom Substrat (1) verlaufenden Bereich bzw. Wandabschnitt einer, z.B. durch Aufdampfen, Aufspinnen, Aufsputtern, Auftropfen, reaktives Abscheiden, durch CVD- oder PECVD-Verfahren, od.dgl. aufgebrachten Schicht (2) z.B. aus Kunststoff, Glas, Keramik, $Si_3N_4$, $SiO_2$, $SiO$, Kombinationen dieser Materialien, od. dgl., ausgebildet ist, und daß die Meßeinrichtungen in Schichtform auf das Substrat (1) und/oder auf die Schicht (2) aufgebracht bzw. in dem Substrat (1) und/oder in der Schicht (2) ausgebildet sind, z.B. durch Aufdampfen, Aufspinnen, Aufsputtern, Auftropfen, reaktives Abscheiden, durch CVD- oder PECVD-Verfahren, od.dgl.

2. Einrichtung nach Anspruch 1, dadurch gekennzeichnet, daß das Substrat (1) und/oder die Schicht (2) selbst Teil zumindest einer Meßeinrichtung bzw. zumindest einer das Fluid beeinflussenden Einrichtung, z.B. Heizeinrichtung, ist bzw. in diese integriert ist, indem in dem Substrat (1) und/oder in der Schicht (2) als Grundkörper, z.B. aus $SiO_2$, durch Ionenimplantation, Dotierung, reaktive Abscheidung, CVD- oder PECVD-Verfahren od.dgl., Meßschichten und/oder das Fluid beeinflussende Schichten ausgebildet werden.

0226570

3. Einrichtung insbesondere nach Anspruch 1 oder 2, dadurch gekennzeichnet,

daß bei einer Meßeinrichtung zur Messung der Wärmeleitfähigkeit und/oder Viskosität eines Fluides auf bzw. in dem Substrat (1) und/oder auf bzw. in der Schicht (2), gegebenenfalls jeweils einander gegenüberliegend, zumindest eine Heizschicht (6,6') und zumindest eine vorzugsweise eine Anzahl von Temperatursensorschicht(en) (7,7') ausgebildet ist (sind), die bei Viskositätsmessungen vorzugsweise stromabwärts und bei Wärmeleitfähigkeitsmessungen stromauf und/oder stromabwärts der Heizschicht (6,6') gelegen ist (sind).

4. Einrichtung insbesondere nach einem der Ansprüche 1 bis 3, dadurch gekennzeichnet,

daß bei einer Meßeinrichtung für die Viskosität und/oder Dielektrizitätskonstante eines Fluids im Bereich des Meßkanals (3) am bzw. im Substrat (1) und auf bzw. in der Schicht (2) einander gegenüberliegende, sich vorzugsweise in Längsrichtung des Meßkanals (3) erstreckende, elektrisch leitende Kondensatorschichten (10,10') ausgebildet sind.

5. Einrichtung insbesondere nach einem der Ansprüche 1 bis 4, dadurch gekennzeichnet,

daß bei einer Meßeinrichtung für die Dichte eines Fluids am bzw. im insbesondere piezoelektrischen Substrat (1) im Bereich des Meßkanals (3) zumindest eine Geberschicht (11) und im Abstand dazu, z.B. stromabwärts, zumindest eine Empfängerschicht (12) für Surface Acoustic Waves (Oberflächenwellen) ausgebildet sind.

6. Einrichtung nach einem der Ansprüche 1 bis 5, dadurch gekennzeichnet,

daß als Meßeinrichtung auf bzw. in dem Substrat (1) und/oder auf bzw. in der Schicht (2) optisch empfindliche Geber- und/oder Detektorschichten, z.B. einander gegenüberliegend oder durch im Strahlengang auf dem Substrat bzw. auf der Schicht befindliche spiegelnde Flächen verbunden, ausgebildet sind.

7. Einrichtung nach einem der Ansprüche 1 bis 6,

dadurch gekennzeichnet,

daß als Meßeinrichtung auf dem bzw. im Substrat (1) und/oder auf bzw. in der Schicht (2) zumindest eine druckempfindliche Schicht im Inneren des Meßkanals, insbesondere an den Innenflächen des Substrates (1) und/oder der Schicht (2) ausgebildet ist.


8. Einrichtung nach einem der Ansprüche 1 bis 7,

dadurch gekennzeichnet,

daß die Breite des Meßkanals (3) seine Höhe übersteigt, daß insbesondere die Breite des Meßkanals (3) ein Vielfaches der Höhe ist, und daß gegebenenfalls die Höhe 0,01 bis 50 µm beträgt.


9. Einrichtung nach einem der Ansprüche 1 bis 8,

dadurch gekennzeichnet,

daß die Einbring- und/oder Austragsöffnungen von durch das Substrat in den Meßkanal (3) führenden Löchern (4,5) oder von den Mündungsöffnungen von vom Substrat getragenen Rohren (17), die von der Schicht (2) dicht umschlossen sind, gebildet sind.


10. Einrichtung nach einem der Ansprüche 1 bis 9,

dadurch gekennzeichnet,

daß die Heizschicht (6,6') und/oder die Temperatursensorschicht (7,7') bzw. die Kondensatorschichten (10,10') bzw. die Geber- und Empfängerschichten (11,12) bzw. die optischen Geber- und/oder Empfängerflächen, druckempfindlichen Schichten, auf dem Substrat (1), gegebenenfalls in ausgeätzte Vertiefungen desselben, und/oder auf der Außenseite der Schicht (2) aufgetragene bzw. ausgebildete, z.B. aufgedampfte, aufgesputterte, durch CVD- bzw. PECVD-Verfahren abgelagerte, od.dgl. Schichtflächen, Leiterbahnnen, Halbleiterschichten oder mit Ionen dotierte bzw. implantierte oder durch reaktive Ablagerung hergestellte Schichten im Substrat (1) bzw. in der Schicht (2) od.dgl. sind.

0226570

11. Einrichtung nach einem der Ansprüche 1 bis 10, dadurch gekennzeichnet,

daß die vom Substrat (1) und/oder von der Schicht (2) getragenen bzw. in diesen ausgebildeten Schichten, z.B. die Heizschicht (6) und/oder die Meßsensorschicht (7) bzw. die Kondensatorschicht (10) bzw. die Geber- und Empfängerschichten (11,12) von einer auf das Substrat (1) und/oder die Schicht (2) aufgebrachten Deckschicht (8) abgedeckt sind.

12. Einrichtung nach einem der Ansprüche 1 bis 11, dadurch gekennzeichnet,

daß die auf die Außenseite der Schicht (2) aufgebrachten Heizschichten (6') und/oder die Meßsensorschichten (7') bzw. die Kondensatorschicht (10') von einer auf die Schicht (2) aufgebrachten weiteren Deckschicht (9) abgedeckt sind.

13. Einrichtung nach einem der Ansprüche 1 bis 12, dadurch gekennzeichnet,

daß jedem Meßkanal (3) ein im wesentlichen gleich ausgebildeter bzw. aufgebauter Referenzmeßkanal zur Messung eines Referenzfluides zugeordnet ist.

14. Einrichtung nach einem der Ansprüche 4 bis 13, dadurch gekennzeichnet,

daß die Dicke der Schicht (2) oder die Dicke der auf das Substrat (1) zur Abdeckung der Kondensatorschicht (10) aufgebrachten Deckschicht (8') der Größenordnung nach der Höhe des Meßkanals (3) entspricht bzw. vorzugsweise annähernd gleich der Höhe des Meßkanals (3) ist.

15. Einrichtung nach einem der Ansprüche 1 bis 14, dadurch gekennzeichnet,

daß der Meßkanal (3) annähernd rechteckigen bzw. trapezförmigen Querschnitt aufweist.

16. Rohranschluß bzw. Rohrmündung, insbesondere zur Verbindung von Rohren mit einer der Meßeinrichtungen gemäß einem der Ansprüche 1 bis 15, für die Ausbildung von Rohrenden bzw. Rohrfortsetzungen, od.dgl., dadurch gekennzeichnet, daß auf zumindest ein gegebenenfalls mit dem Substrat (1) verbundenes, z.B. verklebtes, Rohr (17) unter Freilassung der Rohröffnung zumindest eine Schicht (2) aufgebracht ist, z.B. aufgetropft, aufgedampft, aufgesputtert, aufgespinnt, reaktiv abgeschieden, durch CVD- bzw. PECVD-Verfahren abgelagert, od.dgl., die mit dem Rohr (17) und dem Substrat (1) dicht verbunden ist und zwischen sich und dem Substrat (1) zumindest einen das Rohrvolumen fortsetzenden Freiraum (18) ausbildet bzw. begrenzt.

17. Rohranschluß nach Anspruch 16, dadurch gekennzeichnet, daß zur Ausbildung einer Rohrverbindung zwischen zumindest zwei Rohren (17) die Schicht (2) bis zu zumindest einem weiteren, gegebenenfalls auf dem Substrat (1) befestigten Rohr (17) geführt ist und mit diesem(n) dichtend verbunden ist, wobei der von der Schicht (2) und dem Substrat (1) begrenzte Freiraum (18) zum Rohrvolumen des (der) weiteren Rohre(s) geführt ist.

18. Rohranschluß nach Anspruch 16 oder 17, dadurch gekennzeichnet, daß der Freiraum (18) zu einer Düse verengt ist.

19. Rohranschluß nach einem der Ansprüche 16 bis 18, dadurch gekennzeichnet, daß die Schicht (2) zumindest teilweise durch aufgebrachte Schichtflächen (16) und/oder mit zumindest einer weiteren durchgehend aufgebrachten Schicht (16') verstärkt ist.

20. Rohranschluß nach einem der Ansprüche 16 bis 19, dadurch gekennzeichnet, daß das (die) Rohr(e) (17) auf dem Substrat (1) in (einer) Vertiefung(en) bzw. Nut(en) (19) angeordnet ist (sind), die gegebenenfalls an die Rohrform angepaßt ist (sind).

0226570

21. Rohranschluß nach einem der Ansprüche 16 bis 20,
dadurch gekennzeichnet,
daß die den Freiraum (18) eines Rohres begrenzende Schicht (2) zu mehreren Rohren (17) verzweigt ist bzw. das Rohrvolumen mehrerer Rohre (17) zusammenführt, wobei gegebenenfalls der Querschnitt des von der Schicht (2) begrenzten Rohrvolumens bzw. Freiraumes (18) variiert ist.

22. Rohranschluß nach einem der Ansprüche 16 bis 21,
dadurch gekennzeichnet,
daß die die Rohrmündung dicht umgehende Schicht (2) als Meßkanal (3) einer Meßeinrichtung gemäß einem der Ansprüche 1 bis 15 ausgebildet ist.

23. Verfahren zur Herstellung einer Meßeinrichtung nach einem der Ansprüche 1 bis 15, insbesondere einer Durchflußmeßeinrichtung für die Wärmeleitfähigkeit, Viskosität, Dichte, Dielektrizitätskonstante, den Brechungsindex, od.dgl., eines Fluides, bei welcher das zu untersuchende Fluid durch bzw. in einen Meßkanal mit zumindest einem Meßsensor geführt bzw. eingebracht wird,
dadurch gekennzeichnet,
daß auf ein Substrat (1) eine dem Innenraum des Meßkanals (3) entsprechende Beschichtung aus einer löslichen Substanz, z.B. Fotolack, Kunststoff, od.dgl., aufgebracht wird, daß auf diese lösliche Beschichtung eine diese überdeckende bis auf das Substrat (1) reichende Schicht (2) aufgetragen, z.B. aufgedampft, aufgespinnt, aufgetropft, aufgesputtert, reaktiv oder durch CVD- oder PECVD-Verfahren abgeschieden, od.dgl., wird, die an Stellen, die frei von der löslichen Beschichtung sind, sich mit dem Substrat verbindet bzw. am Substrat (1) anhaftet und zwischen sich und dem Substrat (1) den Meßkanal (3) begrenzt, und daß die lösliche Beschichtung mit einer vorteilhafterweise die Schicht (2) und das Substrat (1) nicht lösenden bzw. angreifenden Substanz durch die in den Meßkanal (3) mündenden Einbring- und/oder Austragöffnungen (4,5) herausgelöst wird.

24. Verfahren nach Anspruch 23,
dadurch gekennzeichnet,

daß vor dem Aufbringen der löslichen Substanz auf das Substrat (1), gegebenenfalls in herausgeätzte Vertiefungen des Substrates (1), Leiterschichten, Sensorschichten, Geber- bzw. Empfängerschichten, Kondensatorschichten, optisch empfindliche Schichten, druckempfindliche Schichten, od.dgl., z.B. durch Aufdampfen, Auftropfen, Aufsputtern, Dotieren bzw. Implantieren von Ionen, CVD- oder PECVD-Verfahren, od.dgl., aufgebracht bzw. in dem Substrat (1) ausgebildet werden, die gegebenenfalls mit einer Deckschicht (8) abgedeckt werden.

25. Verfahren nach Anspruch 23 oder 24,
dadurch gekennzeichnet,
daß insbesondere nach dem Herauslösen der löslichen Beschichtung auf die Außenseite der Schicht (2) Leiterschichten, Sensorschichten, Geber- und/oder Empfängerschichten, Kondensatorschichten, od.dgl., aufgebracht bzw. in der Schicht (2) ausgebildet werden und gegebenenfalls auf diese Schichten eine Abdeckschicht (9) aufgebracht wird.

26. Verfahren nach einem der Ansprüche 23 bis 25,
dadurch gekennzeichnet,
daß der Innenraum des Meßkanals (3) zur Behandlung der Schicht (2) und/oder des Substrates (1) und/oder der auf- bzw. eingebrachten Schichten, gegebenenfalls gleichzeitig mit dem Auslösen der löslichen Substanz, z.B. zur Ausweitung geätzt, passiviert oder mit eingebrachten Deckschichten (8) überzogen wird.

27. Verfahren zur Verbindung von Rohren mit einer Meßeinrichtung gemäß einem der Ansprüche 1 bis 15, bzw. zur Herstellung von Rohranschlüssen gemäß einem der Ansprüche 16 bis 22, insbesondere in Verbindung mit einem der Ansprüche 23 bis 26,
dadurch gekennzeichnet,
daß auf ein Substrat (1) und auf zumindest ein, gegebenenfalls an dem Substrat befestigtes, z.B. angeklebtes, Rohr (17) eine lösliche Substanz, z.B. Fotolack, Kunststoff, od.dgl., in Form einer das Rohrvolumen fortsetzenden Beschichtung aufgetragen wird, daß auf diese lösliche Beschichtung eine diese überdeckende und bis auf das Rohr (17) und das Substrat (1) reichende, dicht am Rohr (17) und dem Substrat (1) anliegende bzw. sich dichtend mit diesen verbindende Schicht (2) aufgetragen wird, z.B. aufgedampft, aufgetropft, aufgesputtert, aufgespinnt, reaktiv oder durch CVD- oder PECVD-Verfahren abgeschieden, od.dgl., und daß daraufhin die lösliche Substanz durch die Mündungsöffnung (4,5) des Rohres (17) und/oder durch die Mündungsöffnung des von der Schicht (2) begrenzten fortgesetzten Rohrvolumens bzw. Freiraumes (18) vorteilhafterweist mit einer das Substrat (1) und/oder die Schicht (2) nicht angreifenden bzw. diese unberührt lassenden Substanz herausgelöst wird.

28. Verfahren nach einem der Ansprüche 23 bis 27, dadurch gekennzeichnet, daß auf die Schicht (2) lokale Verstärkungen (16) und/oder zumindest eine weitere Schicht (16') aufgetragen werden.

29. Verfahren nach einem der Ansprüche 23 bis 28, dadurch gekennzeichnet, daß längs des Verlaufs des Meßkanals (3) bzw. längs der Fortsetzung des Rohrvolumens bzw. längs des Freiraumes (18) die Oberfläche des Substrates (1) herausgeätzt wird, insbesondere bis zu einer Tiefe, die der Tiefe entspricht, um die das Rohr (17) in die Oberfläche des Substrates (1) versenkt angeordnet wird.

30. Verfahren nach einem der Ansprüche 23 bis 29, dadurch gekennzeichnet, daß die Form der Ausbreitung bzw. Flächenerstreckung der Beschichtung aus löslicher Substanz auf einem Rohr (17) und/oder dem Substrat (1) durch eine auf das Substrat (1) und/oder das Rohr (17) auf- bzw. anlegbare Maske begrenzt bzw. bestimmt wird.

Fig. 1
Fig. 1a
Fig. 1b
Fig. 1c
Fig. 2
Fig. 2a
Fig. 2b
Fig. 3
Fig. 3a
Fig. 4
Fig. 5
Fig. 6
Fig. 7
Fig. 8
Fig. 9

0226570